(19) Europäisches Patentamt

European Patent Office

Office européen des brevets

(11) Veröffentlichungsnummer: **0 218 902 B1**

(12) **EUROPÄISCHE PATENTSCHRIFT**

(45) Veröffentlichungstag der Patentschrift: **01.04.92**

(21) Anmeldenummer: **86112332.1**

(22) Anmeldetag: **05.09.86**

(51) Int. Cl.⁵: **B62D 33/06**

(54) **Arretiervorrichtung für eine klappbare Schlafliege eines Fahrzeuges.**

(30) Priorität: **07.10.85 DE 3535750**

(43) Veröffentlichungstag der Anmeldung:
**22.04.87 Patentblatt 87/17**

(45) Bekanntmachung des Hinweises auf die
Patenterteilung:
**01.04.92 Patentblatt 92/14**

(84) Benannte Vertragsstaaten:
**DE FR GB IT NL SE**

(56) Entgegenhaltungen:
**DE-C- 531 428**
**FR-A- 2 325 535**
**US-A- 2 229 608**
**US-A- 2 564 878**

(73) Patentinhaber: **MAN Nutzfahrzeuge Aktiengesellschaft**
**Dachauer Strasse 667 Postfach 50 06 20**
**W-8000 München 50(DE)**

(72) Erfinder: **Watzek, Gerhard**
**Eduard-Spranger-Strasse**
**W-8000 München 45(DE)**
Erfinder: **Schmiedel, Wolfgang**
**Hochstrasse 27**
**W-8061 Vierkirchen(DE)**

EP 0 218 902 B1

## Beschreibung

Die Erfindung bezieht sich auf eine Arretiervorrichtung für eine hochklappbare, an der Fahrerhausrückwand eines Lkw-Fahrerhauses arretierbare Schlafliege.

Aus der DE-OS 30 45 309 ist eine Arretiervorrichtung für ein hochklappbares Teil im Innenraum eines Fahrzeuges bekannt, mit einer an diesem Teil angeordneten, einer Drehfalle ähnlichen Arretiereinrichtung, welche mit einem verstellbaren Fangbügel einer am Fahrzeug befestigten Fangvorrichtung in Eingriff bringbar ist. Weiterhin ist aus der DE-OS 33 33 879 ein Sperrschloß zum Versperren der Verschwenkungsbewegung der oberen Schlafliege im Fahrerhaus eines Nutzfahrzeuges entnehmbar.

Der Erfindung liegt die Aufgabe zugrunde, eine Vorrichtung zu schaffen, die mit wenig Aufwand eine funktionssichere, klapperfreie Arretierung der Schlafliege in Nicht-Gebrauchsstellung an der Rückwand des Fahrerhauses gewährleistet.

Dies wird erfindungsgemäß dadurch erreicht, daß ein an sich bekanntes, an der Schlafliege fest angebrachtes Drehfallenschloß mit einem schwenkbaren Fangbügel einer an der Fahrerhausrückwand befestigten Fangvorrichtung verrastend in Eingriff bringbar ist. Durch die verrastende Anordnung der Fangvorrichtung im Drehfallenschloß wird eine stoß-und rüttelsichere Positionierung der Schlafliege in der Vertikalen erzielt.

Nach einem vorteilhaften Merkmal der Erfindung besteht die Fangvorrichtung im wesentlichen aus einem Tragteil mit Arretierungsnuten, einem schwenkbaren Fangbügel mit Arretierungsstift, einer Druckfeder und einer Abdeckkappe. Gemäß dieser Konstruktion ergeben sich auch an der Fangvorrichtung definierte Stellungen, die willkürliche Bewegungen des Fangbügels verhindern. Gemäß einer Ausbildungsform sind das Drehfallenschloß und der Auslösehebel mit Kunststoffteilen verkleidet; dies ermöglicht eine bessere Bedienung und bietet Schutz gegen Verletzungen. Nach einer wesentlichen Ausgestaltung der Erfindung ist durch die Anordnung des heruntergeklappten Fangbügels zum Fangmaul, wobei die Drehfalle des Drehfallenschlosses in Öffnungsstellung steht, eine Vorraststellung erzielbar und dann dieselbe durch einen der Schwenkrichtung der Liege entgegengesetzten Zug in die endgültige Raststellung bringbar. Solcherart ist die Schlafliege schon in der vertikalen Nichtgebrauchsstellung gesichert, ohne daß die verrastende Endstellung erreicht ist.

Weitere Vorteile und Merkmale der Erfindung sind den Ansprüchen, der Beschreibung und den Zeichnungen zu entnehmen.

Die Erfindung ist in einem Ausführungsbeispiel dargestellt.

Es zeigen:

Fig.1    eine Seitenansicht der Arretiervorrichtung

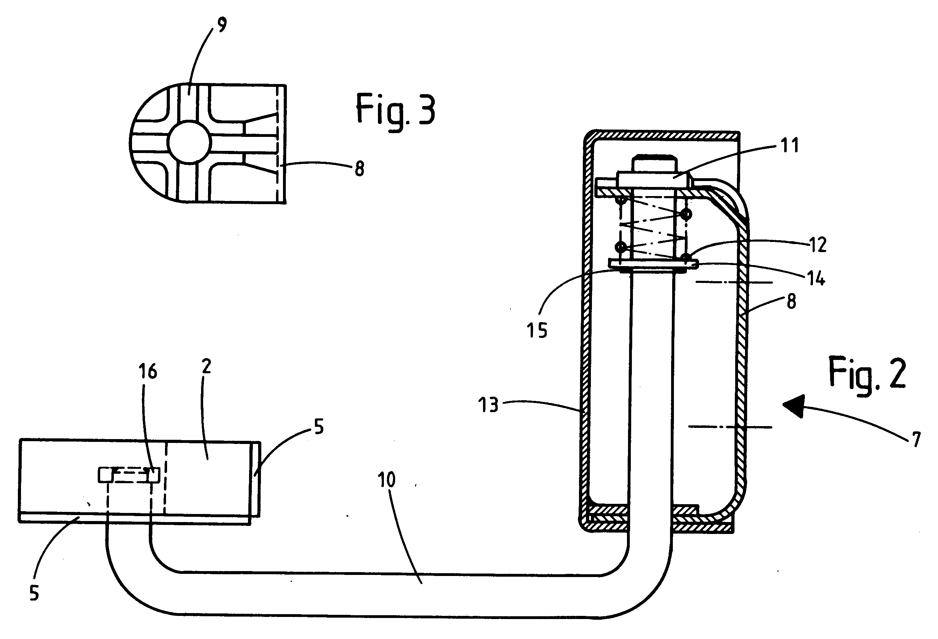

Fig.2    einen bereichsweisen Ausschnitt der Draufsicht

Fig.3    eine Einzelheit des Tragteils 8.

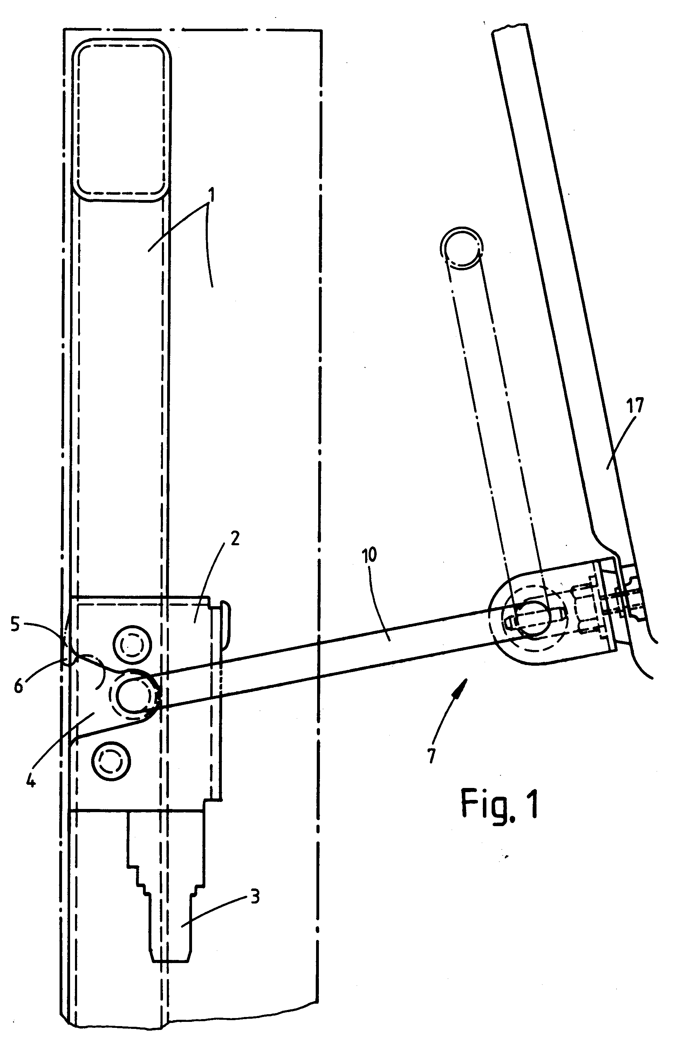

Fig.1 zeigt eine Schlafliege 1 mit einem an ihr fest angebrachten Drehfallenschloß 2 mit einem Auslösehebel 3. Das Drehfallenschloß 2 und Auslösehebel 3 sind mit einem oder mehreren Kunststoffteilen 5 verkleidet. Das Drehfallenschloß und/oder das Kunststoffteil 5 weisen eine Nase 6 auf. An der festen Wand 17 des Fahrerhauses ist eine komplette Fangvorrichtung 7 befestigt. Diese Fangvorrichtung 7 hat ein Tragteil 8, in dem ein Fangbügel 10 schwenkbar gelagert ist. Dem Fangbügel 10 ist ein Arretierungsstift 11 zugeordnet, der verrastend in Arretierungsnuten 9 des Tragteils 8 eingreift. Eine Sicherungsscheibe 15 begrenzt eine Auflagescheibe 14 am Bügel 10, an der eine Druckfeder 12 anliegt, die sich mit ihrem anderen Ende gegen die Seitenwand des Tragteils 8 abstützt und so eine Zugwirkung auf den Arretierungsstift zum Eingreifen in die Arretierungsnuten 9 ausübt. Eine Scheibe 16 ist am fangseitigen Ende des Fangbügels 10 angeordnet.

Die erfindungsgemäße Vorrichtung funktioniert wie folgt: Das Drehfallenschloß sei durch den vorausgegangenen Öffnungsvorgang in Öffnungsstellung (dies kann auch durch einmaliges Betätigen des Auslösehebels erreicht werden). Nach dem Hochklappen der Schlafliege mit der linken Hand wird der parallel zur festen Wand des Fahrerhauses überstehende Fangbügel mit der rechten Hand um 90° nach vorne geklappt. Dort rastet er federnd ein und steht direkt vor dem Fangmaul des Drefallenschlosses. Durch Zurückziehen der Liege rastet das Ende des Fangbügels hörbar in das Drehfallenschloß ein. Sollte der Einrastvorgang nicht stattfinden, so verhindert die Lage des Fangbügels im Fangmaul des Drehfallenschlosses trotzdem das Herunterfallen der Liege. Dies ist also eine zusätzliche Sicherheitsvorkehrung. Das Herunterklappen der Schlafliege wird durch die Betätigung des Auslösehebels des Drehfallenschlosses eingeleitet, wobei der Fangbügel federnd ausschnappt. Jetzt wird die Liege um einen kurzen Weg nach hinten gedrückt und der Fangbügel um ca. 90° nach oben geklappt. Nunmehr ist die Verriegelung gelöst die Liege kann heruntergeklappt werden.

## Patentansprüche

1.    Arretiervorrichtung für eine hochklappbare, an der Fahrerhausrückwand eines Lkw-Fahrerhauses arretierbare Schlafliege (1), dadurch gekennzeichnet, daß ein an sich bekanntes, an der Schlafliege (1) fest angebrachtes Drehfallenschloß (2) mit einem schwenkbaren Fangbügel (10) einer an der Fahrerhausrückwand (17) befestigten Fangvorrichtung (7) verrastend in Eingriff bringbar ist.

2. Arretiervorrichtung nach Anspruch 1, dadurch gekennzeichnet, daß die Fangvorrichtung (7) außer dem schwenkbaren Fangbügel (10) noch aus einem Tragteil (8) mit Arretierungsnuten (9), einer Druckfeder (12) und einer Abdeckkappe (13) besteht und der Fangbügel (10) einen Arretierungsstift (11) aufweist.

3. Arretiervorrichtung nach Anspruch 1 oder 2, dadurch gekennzeichnet, daß das Drehfallenschloß (2) und der Auslösehebel (3) mit Kunststoffteilen (5) verkleidet sind.

4. Arretiervorrichtung nach einem oder mehreren der Ansprüche 1 bis 3, dadurch gekennzeichnet, daß durch die Anordnung des heruntergeklappten Fangbügels (10) zum Fangmaul (4), wobei die Drehfalle des Drehfallschlosses (2) in Öffnungsstellung steht, eine Vorraststellung erzielbar ist und dann dieselbe durch einen der Schwenkrichtung der Liege entgegengesetzten Zug in die entgültige Raststellung bringbar ist.

## Claims

1. A fixing device for a bunk bed (1) which is hingeable upwards and is fixable on the rear cab wall of a lorry cab, characterised in that a known rotating latch-type lock (2) rigidly mounted on the bunk bed (1) can be brought into locking engagement with a pivotal receiving hoop (10) of a receiving device (7) fastened on the rear cab wall (17).

2. A fixing device according to claim 1, characterised in that the receiving device (7), in addition to the pivotal receiving hoop (10), also consists of a supporting member (8) with fixing grooves (9), a compression spring (12) and a covering cap (13), and the receiving hoop (10) has a fixing pin (11).

3. A fixing device according to claim 1 or 2, characterised in that the rotating latch-type lock (2) and the release lever (3) are covered with plastic parts (5).

4. A fixing device according to one or more of claims 1 to 3, characterised in that a pre-lock position can be achieved, owing to the arrangement of the downwardly hinged receiving hoop (10) relative to the receiving orifice (4), the rotating latch of the rotating latch-type lock (2) being in the open position, and the rotating latch can then be brought into the final locked position by a pull in the direction opposed to the pivoting direction of the bunk.

## Revendications

1. Dispositif d'arrêt d'une couchette (1) relevable sur la paroi arrière de la cabine du chauffeur d'un camion, caractérisé en ce qu'une serrure à loquet (2) connue en soi fixée à la couchette (1) peut être mise en prise par encliquetage avec un étrier de prise (10) pivotable d'un dispositif (7) de prise fixé sur la paroi arrière (17) de la cabine du chauffeur.

2. Dispositif d'arrêt selon la revendication 1, caractérisé en ce que le dispositif de prise (7), outre l'étrier de prise (10) pivotable comprend aussi une pièce support (8) avec des rainures d'arrêt (9), un ressort de compression (12) et un couvercle (13) et l'étrier de prise (10) présente une tige de blocage (11).

3. Dispositif d'arrêt selon la revendication 1 ou 2, caractérisé en ce que la serrure à loquet (2) et le levier de déverrouillage (3) sont revêtus de pièces en matière plastique (5).

4. Dispositif d'arrêt selon une ou plusieurs des revendications 1 à 3, caractérisé en ce que par la mise en place de l'étrier de prise rabattu (10) dans l'ouverture de prise (4), le loquet de la serrure (2) étant en position d'ouverture, on obtient une position de préencliquetage et ensuite on peut la faire passer dans la position d'encliquetage finale par une traction opposée au sens de pivotement de la couchette.

Fig. 1

Fig. 2

Fig. 3